# FASCICULE DE BREVET EUROPEEN

(11) **EP 3 762 612 B1**
(45) Date de publication et mention de la délivrance du brevet: **20.04.2022**
(21) Numéro de dépôt: 19703766.6
(22) Date de dépôt: 14.02.2019
(51) Int. Cl.: F04C 25/02, F04C 27/00, F16C 33/78

(54) **POMPE À VIDE DE TYPE SÈCHE**
TROCKENLAUFENDE VAKUUMPUMPE
DRY-TYPE VACUUM PUMP

(30) Priorité: 07.03.2018 FR 1851969
(43) Date de publication de la demande: 13.01.2021
(73) Titulaire: Pfeiffer Vacuum, 74000 Annecy (FR)
(72) Inventeur: CROCHET, Stéphane, 74150 Rumilly (FR)
(74) Mandataire: Croonenbroek, Thomas Jakob
(86) Numéro de dépôt international: PCT/EP2019/053734
(87) Numéro de publication internationale: WO 2019/170386

(56) Documents cités:
- EP-A2- 1 236 901
- EP-B1- 0 993 553
- DE-U1-202014 010 177
- JP-A- S62 186 073
- US-B2- 6 688 864

## Description

La présente invention concerne une pompe à vide de type sèche telle que de type « Roots » ou « Claw » ou à vis. L'invention concerne plus particulièrement l'étanchéité aux lubrifiants de la pompe à vide.

Les pompes à vide primaire de type sèche comportent un ou plusieurs étages de pompage en série dans lesquels circule un gaz à pomper entre une aspiration et un refoulement. On distingue parmi les pompes à vide primaire connues, celles à lobes rotatifs également connues sous le nom « Roots » avec deux lobes ou plus ou celles à bec, également connues sous le nom « Claw » ou encore celles à vis. On connait également les pompes à vide de type compresseurs Roots (ou « Roots Blower » en anglais) qui sont utilisées en amont des pompes à vide primaire, pour augmenter la capacité de pompage en situation de fort flux. Ces pompes à vide sont dites « sèches » car en fonctionnement, les rotors tournent à l'intérieur du stator sans aucun contact mécanique entre eux ou avec le stator, ce qui permet de ne pas utiliser d'huile dans l'étage de pompage. Des exemples de pompes à vide sont décrits dans les documents EP1236901A2 et US6688864B2.

Les arbres rotatifs sont supportés par des roulements à billes qui sont lubrifiés par de l'huile. En fonctionnement, la rotation des arbres dans les paliers génère des polluants tels que des gouttes d'huile qui, lorsqu'elles sont soumises à des variations de pression, peuvent migrer vers l'étage de pompage. Or, il est indispensable qu'aucune trace d'huile ne se retrouve dans l'étage de pompage pour les applications dites « sèches », tels que les procédés de fabrication de substrats semi-conducteurs. Il convient donc d'isoler les paliers lubrifiés de l'étage de pompage sec par un moyen d'étanchéité au travers duquel les arbres sont toujours susceptibles de tourner.

Les moyens d'étanchéité utilisés comprennent principalement des barrières physiques comme des flasques sur roulements, des joints frottants, des disques éjecteurs, des purges de gaz, des pièges à huile comme des chambres de détente et de condensation ou des obstacles comme des labyrinthes et chicanes. Ces solutions tentent principalement de bloquer ou limiter des migrations d'huile. Toutefois en fonctionnement, les pressions mises en oeuvre dans les pompes à vide peuvent fluctuer de manière importante et générer des forces motrices entre les paliers lubrifiés et les étages de pompage susceptibles d'entrainer des particules polluantes des étages de pompage vers le carter d'huile ainsi que des brouillards ou vapeurs d'huile en provenance des paliers vers les étages de pompage, en particulier dans les applications où un volume de gaz est cycliquement mis sous vide.

On cherche notamment à limiter la migration des particules solides ou liquides en provenance des étages de pompage ou des joints frottants, vers le carter d'huile car ces particules, parfois abrasives, peuvent entrainer une dégradation des propriétés de lubrification pouvant par exemple entrainer une usure prématurée des roulements à billes.

Un but de la présente invention est donc de proposer une pompe à vide de type sèche résolvant au moins partiellement les inconvénients de l'état de la technique.

A cet effet, l'invention a pour objet une pompe à vide de type sèche comportant :
- au moins un carter d'huile,
- au moins un étage de pompage,
- deux arbres rotatifs portant respectivement au moins un rotor s'étendant dans le au moins un étage de pompage, les rotors étant configurés pour tourner de façon synchronisée en sens inverse pour entrainer un gaz à pomper entre une aspiration et un refoulement de la pompe à vide, les arbres étant supportés par des paliers lubrifiés par un lubrifiant contenu dans le carter d'huile,
- au moins un dispositif d'étanchéité aux lubrifiants interposé entre le carter d'huile et un étage de pompage au niveau de chaque passage d'arbre, le dispositif d'étanchéité comportant un déflecteur présentant une forme générale de disque monté solidairement en rotation sur l'arbre,
caractérisée en ce que le disque du déflecteur présente une extrémité annulaire sur sa périphérie s'étendant vers l'étage de pompage en formant un renfoncement de retenue.

Le renfoncement de retenue du déflecteur permet de retenir les particules ou poussières pouvant provenir des étages de pompage de la pompe à vide ou des joints frottants, qui seraient éjectées radialement par le déflecteur. On limite ainsi la progression des particules vers les roulements à billes ou le carter d'huile.

La durée de vie des roulements peut alors être augmentée et la pollution de l'huile peut être diminuée, ce qui permet de diminuer la consommation d'huile. Une réduction de l'ordre de 30% de la consommation d'huile et une huile « claire », quasiment exempte de particules polluantes, ont ainsi pu être observées après 1000 heures de fonctionnement d'une pompe à vide comprenant un tel déflecteur.

Le déflecteur ainsi réalisé est simple à fabriquer et peu couteux. Il est de plus compatible avec différents types de joints annulaires d'étanchéité du dispositif d'étanchéité, « dynamiques » ou frottants.

La pompe à vide peut comporter un seul carter d'huile. Ce carter d'huile peut être agencé à côté de l'étage de pompage dit de basse pression ou à côté de l'étage de pompage dit de haute pression dans le cas d'une pompe à vide multiétagée. De l'autre côté, les paliers peuvent être lubrifiés par de la graisse.

La pompe à vide à vide peut aussi comporter deux carters d'huile. Ces carters d'huile sont agencés à une extrémité respective de la pompe à vide, c'est-à-dire d'une part, à côté de l'étage dit de haute pression et à côté de l'étage dit de basse pression dans le cas d'une pompe à vide multiétagée. Dans le cas d'une pompe à vide monoétagée, telle qu'une pompe à vide de type compresseur Roots (appelée « Roots Blower » en anglais), les carters d'huile sont agencés de part et d'autre de l'unique étage de pompage.

L'extrémité annulaire peut présenter toute forme. Elle peut être chanfreinée.

Selon un exemple de réalisation, l'extrémité annulaire présente une forme générale cylindrique, coaxiale à l'axe de rotation de l'arbre.

L'extrémité annulaire peut de plus présenter un rebord radial. Le rebord radial permet d'améliorer la capacité de retenue des particules ou poussières dans le renfoncement de retenue.

Le dispositif d'étanchéité peut comporter un joint annulaire d'étanchéité, tel qu'un joint annulaire frottant ou un joint dynamique. Le joint annulaire frottant comporte par exemple une bague à simple ou double lèvres. Le joint dynamique comporte par exemple un joint à segments.

Selon un exemple de réalisation, l'extrémité annulaire du déflecteur s'étend au moins partiellement autour du joint annulaire d'étanchéité.

Selon un exemple de réalisation, le dispositif d'étanchéité comporte un manchon monté sur l'arbre, le déflecteur étant monté sur le manchon.

Le manchon présente par exemple une forme cylindrique bi-étagée, comprenant un premier étage cylindrique dont le diamètre externe est adapté pour être inséré dans un orifice central du déflecteur et un deuxième étage cylindrique formant une butée axiale pour le déflecteur.

La face du disque portant l'extrémité annulaire peut être perpendiculaire à l'axe de rotation de l'arbre. Selon un autre exemple de réalisation, la face du déflecteur portant l'extrémité annulaire présente une forme générale tronconique, coaxiale au centre du déflecteur et dont le sommet est situé du côté du carter d'huile. Cette forme tronconique permet de guider le retour des particules ou poussières pouvant provenir de l'étage de pompage et qui ne sont pas piégées dans le renfoncement de retenue, vers l'étage de pompage.

La face du disque opposée à la face portant l'extrémité annulaire peut être perpendiculaire à l'axe de rotation de l'arbre. Selon un autre exemple de réalisation, la face opposée à la face portant l'extrémité annulaire présente une forme tronconique, coaxiale au centre du déflecteur et dont le sommet est situé du côté de l'étage de pompage. Cette forme tronconique du déflecteur en rotation permet de guider le retour des projections de lubrifiants frappant le déflecteur vers le carter d'huile.

On peut en outre prévoir qu'une distance axiale inférieure à 3 mm et une distance verticale inférieure à 3 mm séparent un stator de la pompe à vide d'une arête d'une face du déflecteur opposée à la face portant l'extrémité annulaire. Le passage ainsi formé est très étroit entre le stator et le déflecteur. Il permet la dilatation relative des pièces sans que celles-ci ne se touchent tout en créant une faible conductance pour les lubrifiants, limitant ainsi leur migration au-delà du déflecteur.

D'autres avantages et caractéristiques apparaîtront à la lecture de la description de l'invention, ainsi que des dessins annexés sur lesquels :
Figure 1 montre une vue très schématique d'un exemple de pompe à vide de type sèche.
Figure 2 montre une vue en coupe partielle d'une partie de la pompe à vide de la Figure 1 montrant notamment un dispositif d'étanchéité.
Figure 3 montre une vue agrandie d'un détail du dispositif d'étanchéité de la Figure 2.
Figure 4 montre une vue en perspective d'un déflecteur du dispositif d'étanchéité de la Figure 2.
Figure 5 montre une vue en coupe du déflecteur de la Figure 4.
Figure 6 montre une vue agrandie d'un détail de la Figure 5.
Figure 7 montre une vue en perspective d'un manchon du dispositif d'étanchéité de la Figure 2.
Figure 8 montre une vue en coupe du manchon de la Figure 7.
Figure 9 montre une vue similaire à la Figure 3 pour un deuxième exemple de réalisation du déflecteur.
Figure 10 montre une vue similaire à la Figure 3 pour un troisième exemple de réalisation du déflecteur.
Figure 11 montre une vue similaire à la Figure 3 pour un quatrième exemple de réalisation du déflecteur qui ne correspond pas à l'invention.
Figure 12 montre une vue similaire à la Figure 3 pour un deuxième exemple de réalisation du joint annulaire d'étanchéité.

Sur ces figures, les éléments identiques portent les mêmes numéros de référence. Les dessins des Figures sont simplifiés pour faciliter leur compréhension.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées ou interchangées pour fournir d'autres réalisations.

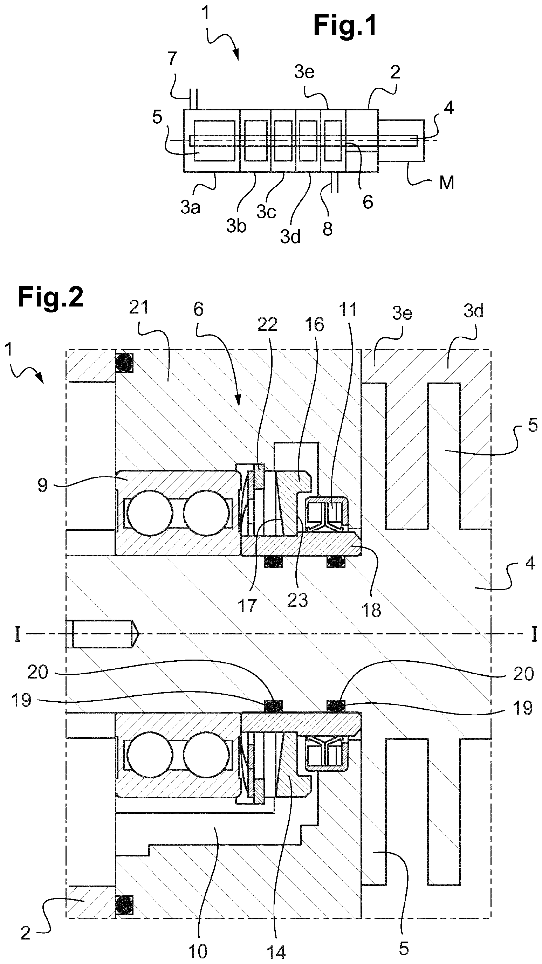

La Figure 1 représente une pompe à vide 1 de type sèche.

La pompe à vide 1 comporte au moins un carter d'huile 2, au moins un étage de pompage 3a-3e, deux arbres 4 rotatifs et au moins un dispositif d'étanchéité 6 aux lubrifiants interposé entre le carter d'huile 2 et un étage de pompage 3e.

Les arbres 4 portent respectivement au moins un rotor 5 s'étendant dans le au moins un étage de pompage 3a-3e.

Dans l'exemple illustratif, la pompe à vide 1 comporte plusieurs étages de pompage 3a, 3b, 3c, 3d, 3e, tel que cinq, montés en série entre une aspiration 7 et un refoulement 8 de la pompe à vide 1 et dans lesquels un gaz à pomper peut circuler. L'étage de pompage 3e jouxtant le dispositif d'étanchéité 6 est ici le dernier étage de pompage 3e (dit de « haute pression » car ici configuré pour refouler les gaz pompés à pression atmosphérique).

Chaque étage de pompage 3a, 3b, 3c, 3d, 3e comprend une entrée et une sortie respectives. Les étages de pompage successifs 3a- 3e sont raccordés en série les uns à la suite des autres par des canaux inter-étages respectifs raccordant la sortie de l'étage de pompage qui précède à l'entrée de l'étage qui suit.

Les rotors 5 présentent par exemple des lobes de profils identiques, par exemple de type « Roots » (section en forme de « huit » ou de « haricot ») ou de type « Claw » ou sont de type à vis ou d'un autre principe similaire de pompe à vide volumétrique.

Les rotors 5 à lobes de profils identiques sont angulairement décalés. Les rotors 5 sont entrainés pour tourner de façon synchronisée en sens inverse dans chaque étage pour entrainer un gaz à pomper entre l'aspiration 7 et le refoulement 8. Lors de la rotation, le gaz aspiré depuis l'entrée est emprisonné dans le volume engendré par les rotors 5 et le stator, puis est entraîné par les rotors 5 vers l'étage suivant.

La pompe à vide 1 est par exemple une pompe à vide primaire, la pression de refoulement de la pompe à vide 1 étant alors la pression atmosphérique. Selon un autre exemple, la pompe à vide 1 est une pompe Roots dite « compresseur Roots » (« Roots Blower » en anglais) qui est utilisée en série et en amont d'une pompe à vide primaire.

Les arbres 4 sont entraînés, par exemple du côté du refoulement 8, par un moteur M de la pompe à vide 1. Ils sont supportés par des paliers lubrifiés par un lubrifiant contenu dans le carter d'huile 2. Le lubrifiant, tel que de l'huile, permet de lubrifier notamment les roulements à billes 9 des paliers et les engrenages (Figure 2).

Un dispositif d'étanchéité 6 aux lubrifiants est interposé entre le carter d'huile 2 et un étage de pompage 3e au niveau de chaque passage d'arbre. Il y a donc un dispositif d'étanchéité 6 sur l'arbre menant 4 et un dispositif d'étanchéité sur l'arbre mené 4.

Comme on peut mieux le voir sur la Figure 2, le dispositif d'étanchéité 6 peut comporter au moins un joint annulaire d'étanchéité 11.

Le joint annulaire d'étanchéité 11 comporte par exemple un joint « dynamique », c'est-à-dire non frottant, tel qu'un joint à segments, un joint labyrinthe ou une chicane ou un « mur » de gaz, ou un joint annulaire frottant, tel qu'un joint à lèvres ou une combinaison de ces réalisations. Le joint annulaire d'étanchéité 11 crée une conductance très faible autour des arbres 4 rotatifs, ce qui permet de limiter fortement le passage des fluides lubrifiants depuis le carter 2 vers les étages de pompage secs 3a-3e et vice-versa tout en permettant aux arbres 4 de tourner.

Dans les exemples illustrés sur les Figures 1 à 11, le joint annulaire d'étanchéité 11 est frottant.

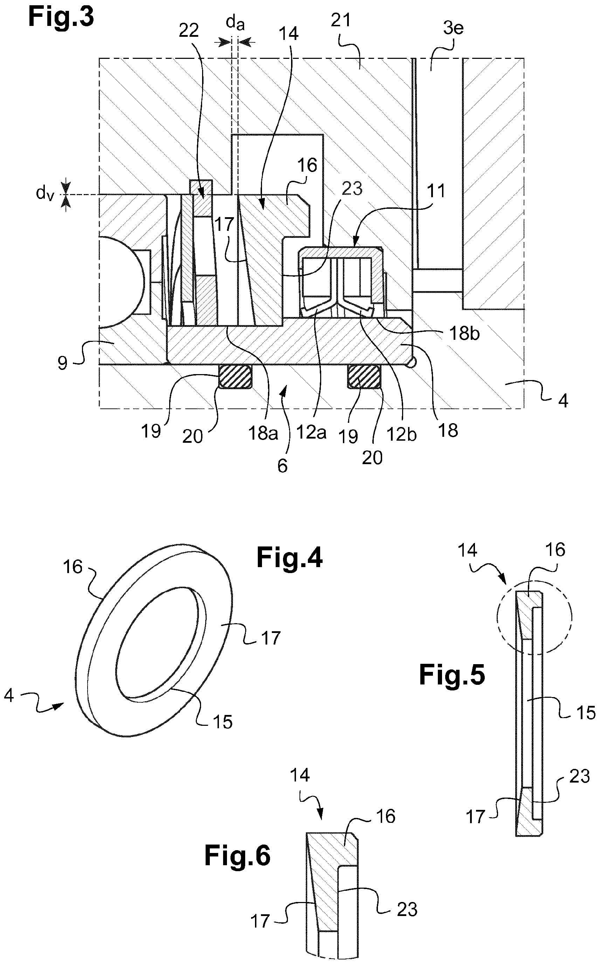

Le joint annulaire d'étanchéité 11 frottant comporte par exemple une bague à double lèvres 12a, 12b (Figure 3).

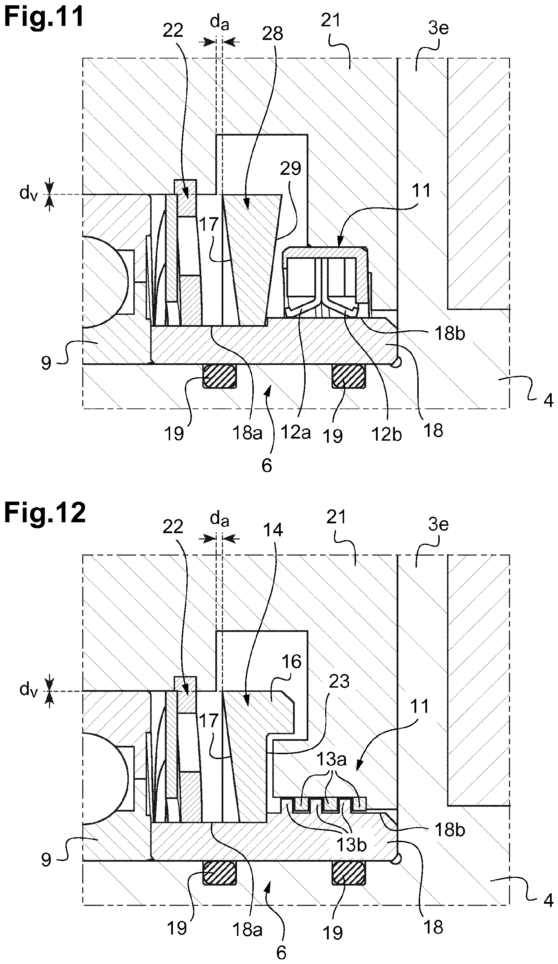

La Figure 12 montre un autre exemple pour lequel le joint annulaire d'étanchéité 11 est un joint dynamique comportant un joint à segments.

Le joint à segments comporte un ou plusieurs anneaux 13a montés solidairement dans le stator 21. Un faible jeu de l'ordre de quelques dixièmes sépare ces anneaux 13a fixes d'anneaux complémentaires 13b solidaires en rotation de l'arbre 4, pour assurer l'étanchéité au niveau des passages d'arbres.

Le dispositif d'étanchéité 6 comporte en outre un déflecteur 14 présentant une forme générale de disque monté solidairement en rotation sur l'arbre 4 (Figures 2, 3 et 4). Le disque présente un orifice central 15 de montage sur l'arbre 4. La force centrifuge créée par la rotation rapide du déflecteur 14 limite la progression de l'huile vers le joint annulaire d'étanchéité 11.

Un canal de récupération d'huile 10 peut être ménagé dans le stator 21 pour renvoyer les lubrifiants vers le carter d'huile 2 (Figure 2). L'entrée du canal de récupération d'huile 10 est par exemple agencée en regard du déflecteur 14 dans une partie inférieure du stator 21. Il y a par exemple un premier canal de récupération d'huile 10 en regard du déflecteur 14 de l'arbre 4 menant et un deuxième canal de récupération d'huile 10 en regard du déflecteur 14 de l'arbre 4 mené.

Selon l'invention, le disque du déflecteur 14 présente en outre une extrémité annulaire 16 sur sa périphérie, s'étendant vers l'étage de pompage 3e en formant un renfoncement de retenue. Le renfoncement de retenue permet de retenir les particules ou poussières pouvant provenir des étages de pompage 3a-3e de la pompe à vide 1 ou des joints annulaires d'étanchéité 11 frottants, qui seraient éjectées radialement par la face 23 du déflecteur 14. On empêche ainsi la migration de celles-ci vers les roulements 9 ou le carter d'huile 2.

Le déflecteur 14 est par exemple réalisé en acier.

Selon un premier exemple de réalisation, l'extrémité annulaire 16 présente une forme générale cylindrique, coaxiale à l'axe de rotation I-I de l'arbre 4 (Figures 2, 5 et 6). L'extrémité annulaire 16 s'étend alors au droit du disque du déflecteur 14, dans une direction parallèle à l'axe de rotation I-I. Le renfoncement de retenue présente ainsi une forme générale cylindrique.

Selon un exemple de réalisation, l'extrémité annulaire 16 du déflecteur 14 s'étend au moins partiellement autour du joint annulaire d'étanchéité 11 interposé entre le déflecteur 14 et l'étage de pompage 3e (Figures 2 et 3). Autrement dit, l'extrémité annulaire 16 recouvre au moins partiellement le joint annulaire d'étanchéité 11.

Dans l'exemple montré sur les Figures 2 et 3, le joint annulaire d'étanchéité 11 est partiellement dégagé d'un logement du stator 21 de la pompe à vide 1 dans lequel le dos de la bague est par exemple encastré. La bague du joint annulaire d'étanchéité 11 présente par exemple une section sensiblement parallélépipédique. Une chicane peut ainsi être formée entre le stator 21 et l'extrémité annulaire 16 du déflecteur 14 et entre le renfoncement de retenue du déflecteur 14 et la partie fixe du joint annulaire d'étanchéité 11.

Dans l'exemple montré sur la Figure 12, la forme proéminente du joint annulaire d'étanchéité 11 faisant saillie dans le renfoncement de retenue du déflecteur 14 est formée par le stator 21 au niveau de la partie fixe du joint à segments (Figure 12).

Cette chicane participe à la retenue des particules en provenance des étages de pompage 3a-3e dans le renfoncement de retenue du déflecteur 14.

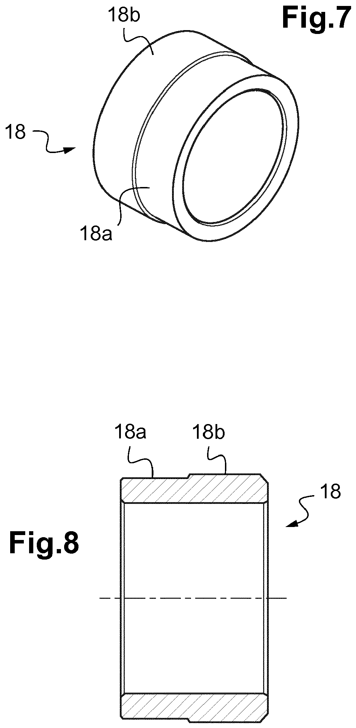

Le dispositif d'étanchéité 6 peut en outre comporter un manchon 18 monté sur l'arbre 4 et sur lequel le déflecteur 14 est monté (Figures 3 et 7).

L'étanchéité entre le manchon 18 et l'arbre 4 est par exemple réalisée au moyen d'au moins un joint torique 19, par exemple deux, montés en série sur l'arbre 4 dans des gorges annulaires 20 ménagées dans l'arbre 4 (Figure 3). Le manchon 18 est maintenu sur l'arbre 4 et l'arbre 4 est maintenu dans ses paliers par exemple au moyen de rondelles élastiques précontraintes 22 interposées entre les manchons 18 et le stator 21.

Le manchon 18 présente par exemple une forme cylindrique bi-étagée comprenant un premier étage cylindrique 18a dont le diamètre externe est adapté pour être inséré dans l'orifice central 15 du déflecteur 14 et un deuxième étage cylindrique 18b formant une butée axiale pour le déflecteur 14 (Figures 3 et 7). Selon un autre mode de réalisation, le manchon 18 et le déflecteur 14 sont réalisés en une seule pièce.

Les lèvres 12a, 12b du joint annulaire d'étanchéité 11 frottent par exemple sur le deuxième étage cylindrique 18b du manchon 18. Une extrémité d'une première lèvre 12a peut être orientée vers le carter d'huile 2 et une extrémité d'une deuxième lèvre 12b peut être orientée vers l'étage de pompage 3e. Les lèvres 12a, 12b peuvent aussi être orientées dans un même sens, vers le carter d'huile 2 ou vers l'étage de pompage 3e selon les applications.

Dans l'exemple de la Figure 12, les anneaux complémentaires 13b du joint à segments sont formés dans le manchon 18.

Le manchon 18 permet notamment d'assurer le montage du déflecteur 14 sur l'arbre 4.

Le manchon 18 est par exemple réalisé en acier et la surface extérieure du manchon 18 peut être traitée, par exemple par un traitement thermique tel qu'une trempe et/ou un revenu, suivi d'une opération de rectification. Ce type de traitement permet d'obtenir un état de surface et une dureté compatibles avec les spécifications d'utilisation des joints annulaires d'étanchéité 11 frottants.

Selon un exemple de réalisation, la face 17 du déflecteur 14 faisant face au carter d'huile 2, opposée à celle portant l'extrémité annulaire 16, présente une forme tronconique, coaxiale au centre du déflecteur 14 et dont le sommet est situé du côté de l'étage de pompage 3e (Figures 2, 3, 4 et 5).

En fonctionnement, la forme tronconique « rentrante » du déflecteur 14 en rotation guide le retour des projections de lubrifiants frappant le déflecteur 14 vers le carter d'huile 2.

On peut de plus prévoir qu'une distance axiale dₐ, dans une direction parallèle l'axe de rotation I-I, inférieure à 3 mm et une distance verticale dᵥ, dans la direction perpendiculaire à l'axe de rotation I-I, inférieure à 3 mm, séparent le stator 21 d'une arête de la face 17 du déflecteur 14 opposée à la face portant l'extrémité annulaire 16 (Figure 3).

Par exemple, deux logements cylindriques adjacents sont ménagés dans le stator 21. Un premier logement cylindrique présente un diamètre du même ordre de grandeur que le diamètre du déflecteur 14 de sorte que la distance verticale dᵥ soit inférieure à 0,5mm. Un deuxième logement cylindrique adjacent, dans lequel est reçu le déflecteur 14, présente un diamètre plus important. La distance axiale dₐ séparant le stator 21 de l'arête de la face 17 du déflecteur 14 est par exemple de l'ordre de 1mm. Le passage ainsi formé est très étroit entre le stator 21 et le déflecteur 14. Il permet la dilatation relative des pièces sans que celles-ci ne se touchent tout en créant une faible conductance pour les lubrifiants, limitant ainsi leur migration au-delà du déflecteur 14.

En fonctionnement, le déflecteur 14 solidaire en rotation de l'arbre 4 tourne à la même vitesse de rotation que l'arbre 4.

La force centrifuge créée par la rotation rapide du déflecteur 14 et la forme tronconique de la face 17 du déflecteur 14 en regard du carter d'huile 2, projettent les lubrifiants pouvant provenir du carter d'huile 2 et frappant le déflecteur 14 vers le carter d'huile 2. On limite ainsi la progression des lubrifiants vers l'étage de pompage 3e, ce qui permet d'améliorer l'étanchéité aux lubrifiants dans les étages de pompage 3a-3e.

L'extrémité annulaire 16 du déflecteur 14 retient les particules ou poussières pouvant provenir des étages de pompage 3a-3e dans le renfoncement de retenue, limitant ainsi la progression des particules vers le carter d'huile 2. La pollution de l'huile du carter 2 peut alors être diminuée, ce qui permet d'augmenter la durée de vie des roulements à billes 9 et de diminuer la consommation d'huile. Une réduction de l'ordre de 30% de la consommation d'huile et une huile « claire » quasiment exempte de particules polluantes, ont ainsi pu être observées après 1000 heures de fonctionnement d'une pompe à vide 1 comprenant un tel déflecteur 14.

Le déflecteur 14 ainsi réalisé est simple à fabriquer et peu couteux. Il est compatible avec différents types de joints annulaires d'étanchéité 11, « dynamiques » ou frottants.

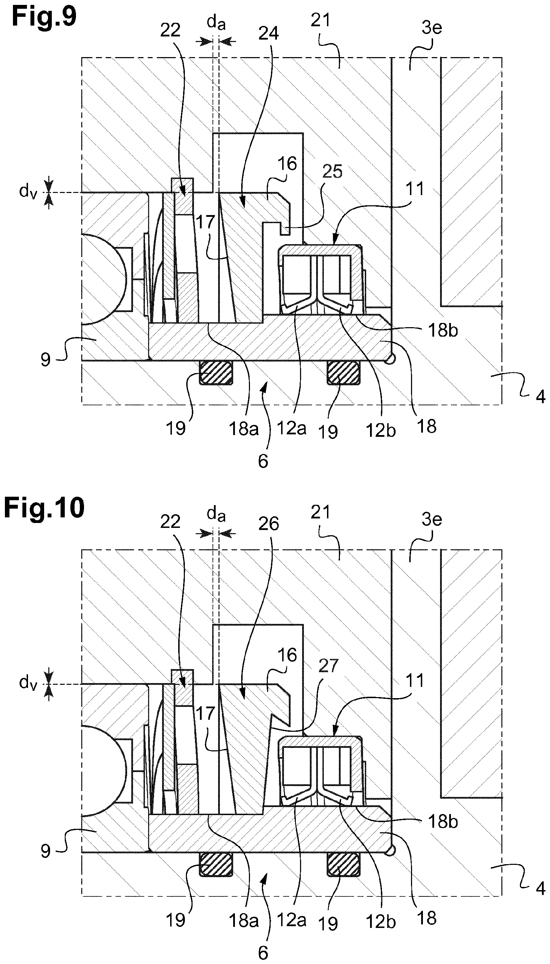

La Figure 9 montre un deuxième exemple de réalisation du déflecteur 24.

Dans ce deuxième exemple de réalisation, l'extrémité annulaire 16 présente un rebord radial 25. Le rebord radial 25 s'étend sensiblement perpendiculairement à l'axe de rotation I-I de l'arbre 4. Il permet d'améliorer la capacité de retenue des particules et poussières éjectées radialement par le déflecteur 24 dans le renfoncement de retenue.

Dans ces deux premiers exemples de réalisation, la face 23 du disque portant l'extrémité annulaire 16 est perpendiculaire à l'axe de rotation I-I.

La Figure 10 montre un troisième exemple de réalisation du déflecteur 26 pour lequel la face 27 du disque portant l'extrémité annulaire 16 présente une forme générale tronconique, coaxiale au centre du déflecteur 26 et dont le sommet est situé du côté du carter d'huile 2.

L'extrémité annulaire 16 peut présenter une forme cylindrique, éventuellement munie d'un rebord radial 25 comme dans les exemples décrits précédemment ou peut présenter d'autres formes telles qu'une forme chanfreinée comme montré sur la Figure 10.

En fonctionnement, la force centrifuge créée par la rotation rapide du déflecteur 26 et la forme tronconique de la face 27 du déflecteur 26 en regard de l'étage de pompage 3e, permettent de guider le retour des particules ou poussières pouvant provenir de l'étage de pompage 3e et qui ne sont pas piégées dans le renfoncement de retenue, vers l'étage de pompage 3e.

La Figure 11 montre un exemple du déflecteur 28 qui ne correspond pas à l'invention définie dans les revendications 1-10.

Cet exemple diffère des précédents par le fait que le déflecteur 28 ne présente pas d'extrémité annulaire 16.

Dans cet exemple, le disque du déflecteur 28 comporte au moins une face 17, 29 présentant une forme tronconique, coaxiale au centre du déflecteur 28.

Une seule face peut présenter une forme tronconique, l'autre face pouvant être perpendiculaire à l'axe de rotation I-I de l'arbre 4.

La face 29 du déflecteur 28 présentant une forme tronconique est par exemple celle faisant face à l'étage de pompage 3e, le sommet de la forme tronconique étant situé du côté du carter d'huile 2.

La face 17 du déflecteur 28 présentant une forme tronconique est par exemple celle faisant face au carter d'huile 2, le sommet de la forme tronconique étant situé du côté de l'étage de pompage 3e.

Les deux faces du déflecteur 28 peuvent aussi présenter une forme tronconique (Figure 11).

En fonctionnement, la forme tronconique de la face 17 en regard du carter d'huile 2, permet de guider le retour des lubrifiants pouvant provenir du carter d'huile 2 et frappant le déflecteur 28, vers le carter d'huile 2. La forme tronconique de la face 29 en regard de l'étage de pompage 3e, permet de guider le retour des particules ou poussières pouvant provenir de l'étage de pompage 3e vers l'étage de pompage 3e.

## Revendications

1. Pompe à vide (1) de type sèche comportant :
- au moins un carter d'huile (2),
- au moins un étage de pompage (3a-3e),
- deux arbres (4) rotatifs portant respectivement au moins un rotor (5) s'étendant dans le au moins un étage de pompage (3a-3e), les rotors (5) étant configurés pour tourner de façon synchronisée en sens inverse pour entrainer un gaz à pomper entre une aspiration (7) et un refoulement (8) de la pompe à vide (1), les arbres (4) étant supportés par des paliers lubrifiés par un lubrifiant contenu dans le carter d'huile (2),
- au moins un dispositif d'étanchéité (6) aux lubrifiants interposé entre le carter d'huile (2) et un étage de pompage (3e) au niveau de chaque passage d'arbre, le dispositif d'étanchéité (6) comportant un déflecteur (14 ; 24 ; 26) présentant une forme générale de disque monté solidairement en rotation sur l'arbre (4),
**caractérisée en ce que** le disque du déflecteur (14 ; 24 ; 26) présente une extrémité annulaire (16) sur sa périphérie, s'étendant vers l'étage de pompage (3e) en formant un renfoncement de retenue.

2. Pompe à vide (1) selon la revendication 1, **caractérisée en ce que** ladite extrémité annulaire (16) présente une forme générale cylindrique, coaxiale à l'axe de rotation (I-I) de l'arbre (4).

3. Pompe à vide (1) selon l'une des revendications précédentes, **caractérisée en ce que** l'extrémité annulaire (16) présente un rebord radial (25).

4. Pompe à vide (1) selon l'une des revendications précédentes, **caractérisée en ce que** le dispositif d'étanchéité (6) comporte un joint annulaire d'étanchéité (11), l'extrémité annulaire (16) du déflecteur (14 ; 24 ; 26) s'étendant au moins partiellement autour du joint annulaire d'étanchéité (11).

5. Pompe à vide (1) selon l'une des revendications précédentes, **caractérisée en ce que** le dispositif d'étanchéité (6) comporte un manchon (18) monté sur l'arbre (4), le déflecteur (14 ; 24 ; 26) étant monté sur le manchon (18).

6. Pompe à vide (1) selon la revendication précédente, **caractérisée en ce que** le manchon (18) présente une forme cylindrique bi-étagée comprenant un premier étage cylindrique (18a) dont le diamètre externe est adapté pour être inséré dans un orifice central (15) du déflecteur (14) et un deuxième étage cylindrique (18b) formant une butée axiale pour le déflecteur (14 ; 24 ; 26).

7. Pompe à vide (1) selon l'une des revendications précédentes, **caractérisée en ce qu'**une face (27) du déflecteur (26) portant l'extrémité annulaire (16) présente une forme générale tronconique, coaxiale au centre du déflecteur (26) et dont le sommet est situé du côté du carter d'huile (2).

8. Pompe à vide (1) selon l'une des revendications précédentes, **caractérisée en ce que** le déflecteur (14 ; 24 ; 26) comporte une face (17) opposée à une face (23 ; 27) portant l'extrémité annulaire (16), présentant une forme tronconique, coaxiale au centre du déflecteur (14 ; 24 ; 26) et dont le sommet est situé du côté de l'étage de pompage (3e).

9. Pompe à vide (1) selon l'une des revendications précédentes, **caractérisée en ce qu'**une distance axiale (dₐ) inférieure à 3 mm et une distance verticale (dᵥ) inférieure à 3 mm séparent un stator (21) de la pompe à vide (1) d'une arête d'une face (17) du déflecteur (14 ; 24 ; 26) opposée à la face (23 ; 27) portant l'extrémité annulaire (16).

10. Pompe à vide (1) selon l'une des revendications précédentes, **caractérisée en ce que** le dispositif d'étanchéité (6) comporte un joint annulaire d'étanchéité (11), tel qu'une bague à simple ou double lèvres (12a, 12b) ou un joint à segments.

## Patentansprüche

1. Trockenlaufende Vakuumpumpe (1), umfassend:
- mindestens eine Ölwanne (2),
- mindestens eine Pumpstufe (3a - 3e),
- zwei drehbare Wellen (4), die jeweils mindestens einen Rotor (5) tragen, der sich in die mindestens eine Pumpstufe (3a - 3e) erstreckt, wobei die Rotoren (5) so konfiguriert sind, dass sie sich synchron in entgegengesetzter Richtung drehen, um ein zu pumpendes Gas zwischen einer Saugseite (7) und einer Druckseite (8) der Vakuumpumpe (1) zu bewegen, wobei die Wellen (4) durch Lager getragen werden, die mit einem in der Ölwanne (2) enthaltenen Schmiermittel geschmiert werden,
- mindestens eine Dichtungsvorrichtung (6) für die Schmiermittel, die zwischen der Ölwanne (2) und einer Pumpstufe (3e) im Bereich jedes Wellendurchgangs angeordnet ist, wobei die Dichtungsvorrichtung (6) einen Deflektor (14; 24; 26) umfasst, der die allgemeine Form einer Scheibe aufweist, die drehfest auf der Welle (4) montiert ist,
**dadurch gekennzeichnet, dass** die Scheibe des Deflektors (14; 24; 26) an ihrem Umfang ein ringförmiges Ende (16) aufweist, das sich in Richtung der Pumpstufe (3e) erstreckt und dabei eine Rückhaltevertiefung bildet.

2. Vakuumpumpe (1) nach Anspruch 1, **dadurch gekennzeichnet, dass** das ringförmige Ende (16) eine allgemeine zylindrische Form aufweist, die koaxial zur Drehachse (I-I) der Welle (4) ist.

3. Vakuumpumpe (1) nach einem der vorangehenden Ansprüche, **dadurch gekennzeichnet, dass** das ringförmige Ende (16) einen radialen Flansch (25) aufweist.

4. Vakuumpumpe (1) nach einem der vorangehenden Ansprüche, **dadurch gekennzeichnet, dass** die Dichtungsvorrichtung (6) eine ringförmige Dichtung (11) umfasst, wobei sich das ringförmige Ende (16) des Deflektors (14; 24; 26) zumindest teilweise um die ringförmige Dichtung (11) herum erstreckt.

5. Vakuumpumpe (1) nach einem der vorangehenden Ansprüche, **dadurch gekennzeichnet, dass** die Dichtungsvorrichtung (6) eine auf der Welle (4) montierte Hülse (18) umfasst, wobei der Deflektor (14; 24; 26) auf der Hülse (18) montiert ist.

6. Vakuumpumpe (1) nach dem vorangehenden Anspruch, **dadurch gekennzeichnet, dass** die Hülse (18) eine zweistufige zylindrische Form aufweist, die eine erste zylindrische Stufe (18a) umfasst, deren Außendurchmesser so angepasst ist, dass er in eine zentrale Öffnung (15) des Deflektors (14) eingeführt werden kann, und eine zweite zylindrische Stufe (18b), die einen axialen Anschlag für den Deflektor (14; 24; 26) bildet.

7. Vakuumpumpe (1) nach einem der vorangehenden Ansprüche, **dadurch gekennzeichnet, dass** eine Seite (27) des Deflektors (26), die das ringförmige Ende (16) trägt, eine allgemein kegelstumpfartige Form aufweist, die koaxial zur Mitte des Deflektors (26) ist und deren Spitze sich auf der Seite der Ölwanne (2) befindet.

8. Vakuumpumpe (1) nach einem der vorangehenden Ansprüche, **dadurch gekennzeichnet, dass** der Deflektor (14; 24; 26) eine Seite (17) umfasst, die der das ringförmige Ende (16) tragenden Seite (23; 27) gegenüberliegt, eine kegelstumpfartige Form aufweisend, koaxial zur Mitte des Deflektors (14; 24; 26) ist und deren Spitze sich auf der Seite der Pumpstufe (3e) befindet.

9. Vakuumpumpe (1) nach einem der vorangehenden Ansprüche, **dadurch gekennzeichnet, dass** ein axialer Abstand (dₐ) von weniger als 3 mm und ein vertikaler Abstand (dᵥ) von weniger als 3 mm einen Stator (21) der Vakuumpumpe (1) von einer Kante einer Seite (17) des Deflektors (14; 24; 26), die der das ringförmige Ende (16) tragenden Seite (23; 27) gegenüberliegt, trennen.

10. Vakuumpumpe (1) nach einem der vorangehenden Ansprüche, **dadurch gekennzeichnet, dass** die Dichtungsvorrichtung (6) eine ringförmige Dichtung (11), wie beispielsweise einen ein- oder zweilippigen Ring (12a, 12b) oder eine Segmentdichtung, umfasst.

## Claims

1. Dry vacuum pump (1) comprising:
- at least one oil sump (2),
- at least one pumping stage (3a-3e),
- two rotating shafts (4) respectively holding at least one rotor (5) extending in the at least one pumping stage (3a-3e), the rotors (5) being configured to rotate in a synchronised manner in opposite directions in order to carry a gas to be pumped between an intake (7) and a discharge (8) of the vacuum pump (1), the shafts (4) being supported by bearings lubricated by a lubricant contained in the oil sump (2),
- at least one lubricant sealing device (6) inserted between the oil sump (2) and a pumping stage (3e) at each shaft passage, the sealing device (6) including a generally disc-shaped deflector (14; 24; 26) mounted on the shaft (4) for rotation therewith, **characterized in that** the disc of the
deflector (14; 24; 26) has an annular end (16) on its periphery, extending towards the pumping stage (3e), forming a retaining recess.

2. Vacuum pump (1) according to Claim 1, **characterized in that** said annular end (16) has a generally cylindrical shape, coaxial with the axis of rotation (I-I) of the shaft (4).

3. Vacuum pump (1) according to one of the previous claims, **characterized in that** the annular end (16) has a radial rim (25).

4. Vacuum pump (1) according to one of the previous claims, **characterized in that** the sealing device (6) comprises a ring seal (11), the annular end (16) of the deflector (14; 24; 26) extending at least partially around the ring seal (11).

5. Vacuum pump (1) according to one of the previous claims, **characterized in that** the sealing device (6) comprises a sleeve (18) mounted on the shaft (4), the deflector (14; 24; 26) being mounted on the sleeve (18).

6. Vacuum pump (1) according to the previous claim, **characterized in that** the sleeve (18) has a two-stage cylindrical shape, including a first cylindrical stage (18a) the outer diameter of which is suitable for being inserted into a central orifice (15) of the deflector (14) and a second cylindrical stage (18b) forming an axial stop for the deflector (14; 24; 26).

7. Vacuum pump (1) according to one of the previous claims, **characterized in that** a face (27) of the deflector (26) bearing the annular end (16) has a general truncated cone shape, coaxial with the centre of the deflector (26) and the vertex of which is located on the side of the oil sump (2).

8. Vacuum pump (1) according to one of the previous claims, **characterized in that** the deflector (14; 24; 26) comprises a face (17) opposite a face (23; 27) bearing the annular end (16), having a truncated cone shape, coaxial with the centre of the deflector (14; 24; 26) and the vertex of which is located on the side of the pumping stage (3e).

9. Vacuum pump (1) according to one of the previous claims, **characterized in that** an axial distance (dₐ) of less than 3 mm and a vertical distance (dᵥ) of less than 3 mm separate a stator (21) of the vacuum pump (1) from an edge of a face (17) of the deflector (14; 24; 26) opposite the face (23; 27) bearing the annular end (16).

10. Vacuum pump (1) according to one of the previous claims, **characterized in that** the sealing device (6) comprises a ring seal (11), such as a ring with a single lip or double lips (12a, 12b) or a segmented seal.
